Europäisches Patentamt

(19) European Patent Office

Office européen des brevets

(11) Numéro de publication : **0 291 430 B1**

(12) **FASCICULE DE BREVET EUROPEEN**

(45) Date de publication du fascicule du brevet :
04.12.91 Bulletin 91/49

(51) Int. Cl.⁵ : **B60T 1/06, F16D 65/847,**
**F16D 55/32**

(21) Numéro de dépôt : **88420158.3**

(22) Date de dépôt : **11.05.88**

(54) **Frein de roue pour véhicule terrestre automobile.**

(30) Priorité : **13.05.87 FR 8707010**

(43) Date de publication de la demande :
**17.11.88 Bulletin 88/46**

(45) Mention de la délivrance du brevet :
**04.12.91 Bulletin 91/49**

(84) Etats contractants désignés :
**DE ES GB IT SE**

(56) Documents cités :
**DE-A- 2 461 159**
**DE-A- 3 009 006**
**DE-B- 1 075 447**
**FR-A- 2 440 492**
**GB-A- 602 730**

(73) Titulaire : **CARBONE INDUSTRIE, Société**
**Anonyme**
**"Les Mercuriales" 40 rue Jean-Jaurès**
**F-93176 Bagnolet Cédex (FR)**

(72) Inventeur : **Gassiat, Alain Louis**
**Le Vallon**
**F-33450 Montussan (FR)**

(74) Mandataire : **Ropital-Bonvarlet, Claude**
**Cabinet BEAU DE LOMENIE, 51, avenue**
**Jean-Jaurès**
**F-69007 Lyon (FR)**

## Description

L'invention concerne le domaine technique du freinage des véhicules terrestres automobiles et elle vise, plus particulièrement, les moyens mis en oeuvre pour assurer le freinage d'un tel véhicule en agissant sur les roues.

L'invention concerne, plus spécifiquement, le freinage d'un véhicule, par l'intermédiaire de freins à disque.

Un système de freinage, du type à disque, comprend un disque métallique, ventilé ou non, fixé rigidement sur le moyeu tournant de la roue pour être entraîné en rotation avec ce dernier.

Le disque est monté perpendiculairement à l'axe de rotation pour que son plan passe par le plan de symétrie d'un étrier immobilisé sur le porte-moyeu. L'étrier porte, sur ses ailes en vis-à-vis, deux garnitures de freinage qui sont placées de part et d'autre des faces du disque que l'étrier chevauche. Des pistons hydrauliques agissent sur les garnitures pour permettre de les déplacer en directions opposées et assurer le pincement du disque, lorsqu'il convient de freiner sa rotation.

Un dispositif de freinage, du type ci-dessus, représente, incontestablement, un progrès par rapport aux mécanismes antérieurs, dits à tambour. Cependant, un tel dispositif ne peut être considéré comme donnant entièrement satisfaction pour les raisons suivantes.

En raison du montage retenu, le disque et l'étrier ne sont pas associés directement à des masses métalliques susceptibles de contribuer à l'évacuation des calories ayant pour origine l'énergie dissipée par le freinage. Un échauffement certain leur est ainsi imposé, en cas d'utilisation intensive. Une montée en température excessive, notamment du disque généralement réalisé en métal, peut être préjudiciable à la structure générale et pénalisante pour l'efficacité de freinage.

Le montage retenu a pour effet de placer l'étrier en relation avec le disque soumis à montée en température. L'échauffement produit est donc, également, appliqué aux pistons actionnés hydrauliquement pour assurer le pincement des garnitures de part et d'autre du disque. L'échauffement du fluide hydraulique commandant les pistons peut être la cause de rupture d'efficacité de freinage, si les vapeurs d'huile, ainsi provoquées, sont suffisamment importantes pour faire naître le phénomène bien connu de vapor-lock.

Le rendement d'un frein à disque dépend plus de la surface active des garnitures que de celle du disque tournant. Par construction, une telle efficacité est donc limitée, étant donné que, jusqu'à présent, la surface utile de la ou des garnitures, voire des jeux de plaquettes successifs mis en oeuvre, est toujours inférieure à la surface de frottement offerte par le disque tournant.

Un montage du type ci-dessus, pouvant être considéré comme simplifié par rapport aux mécanismes antérieurs du type à tambour, n'offre, cependant, pas un accès particulièrement facile et aisé aux garnitures de frottement constituant les éléments d'usure devant être périodiquement changés.

Les expériences, menées jusqu'à présent, ont permis de constater qu'un frein du type ci-dessus est soumis, notamment lorsque le disque est réalisé en une matière d'usure, à une oxydation pour toute sa partie relative qui n'est pas recouverte par les garnitures. L'oxydation de tels matériaux accroît l'usure dans des proportions non négligeables.

Par ailleurs, il est connu, dans l'art antérieur, par la demande de brevet **DE-B-1075447**, un frein à disque du type comportant un disque rotor entraîné en rotation par le moyeu d'une roue et deux disques stator placés de part et d'autre du disque rotor. L'un des disques stator est déplacé par un vérin annulaire pour assurer le pincement du disque rotor.

Il est connu, également, par la demande de brevet **DE-A-3009006** et selon les caractéristiques du préambule de la revendication 1, un frein à disque comportant un rotor entraîné en rotation par le moyeu de la roue et offrant une face de frottement côté moyeu. Le frein comprend aussi un disque stator porté par le porte-moyeu de la roue et offrant une face de frottement côté roue disposée en vis-à-vis et en proche proximité de celle du disque rotor. Le disque stator est apte à être déplacé par un vérin annulaire suivant une direction parallèle à l'axe du moyeu.

Outre le fait que les deux freins décrits ci-dessus subissent un échauffement certain pénalisant l'efficacité de freinage, il apparaît que leur montage ne permet pas un accès facile aux divers éléments d'usure présentés par ces freins.

L'objet de l'invention est de remédier aux inconvénients ci-dessus en proposant un nouveau frein de roue pour véhicules terrestres automobiles. Un tel frein, appartenant à la famille des freins à disque, est conçu pour faire intervenir des éléments de frottement dont la conception nouvelle permet d'accroître l'efficacité de freinage, de réduire les risques de naissance de vapor-lock et d'améliorer, de façon sensible, l'accessibilité pour procéder au démontage et au remplacement de la partie d'usure.

Pour atteindre l'objectif ci-dessus, le frein de roue pour véhicules terrestres automobiles est caractérisé en ce que :

— le disque annulaire stator est monté flottant sur des doigts présentés par le porte-moyeu de la roue,

— les moyens de déplacement sont constitués par des pistons actionnés hydrauliquement, disposés dans le porte-moyeu,

— et le rotor constitue un disque annulaire monté flottant sur une plaque de contre-poussée adaptée de façon amovible sur la face avant du flasque du moyeu et entraînée en rotation par le moyeu.

La description faite ci-dessous en référence aux dessins annexés montre, à titre d'exemples non limitatifs, des formes de réalisation de l'objet de l'invention.

La **fig. 1** est une demi-coupe élévation du frein conforme à l'invention.

La **fig. 2** est une coupe prise selon la ligne brisée II-II de la **fig. 1**.

La **fig. 3** est une coupe prise à plus grande échelle selon la ligne III-III de la **fig. 1**.

La **fig. 4** est une demi-coupe élévation illustrant une variante de réalisation de l'objet de l'invention.

La **fig. 5** est une coupe transversale partielle prise, à échelle différente, selon la ligne V-V de la **fig. 4**.

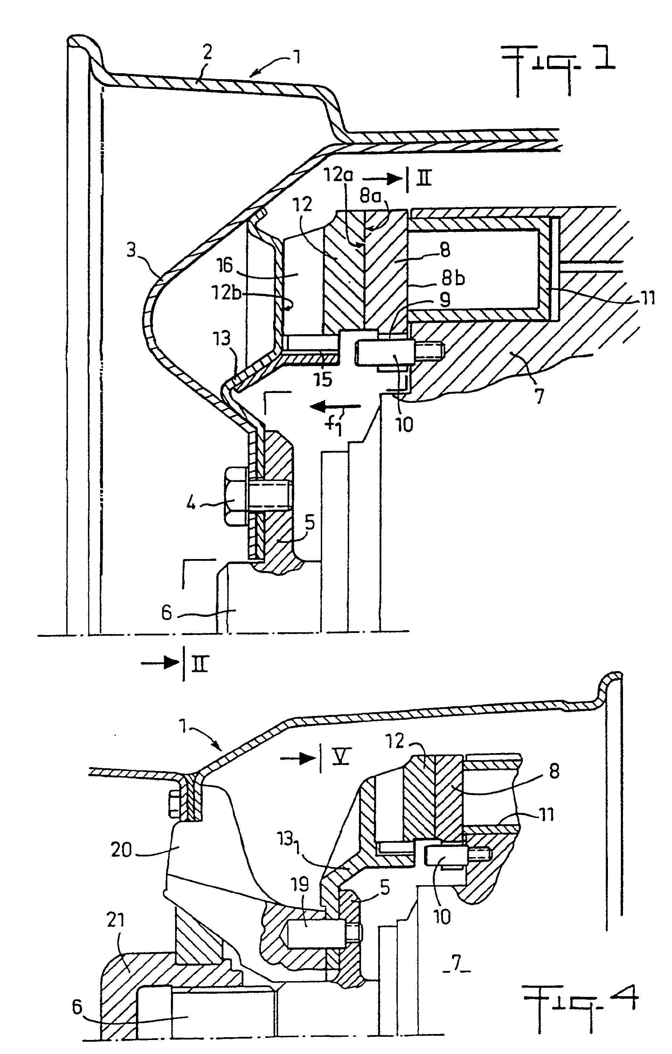

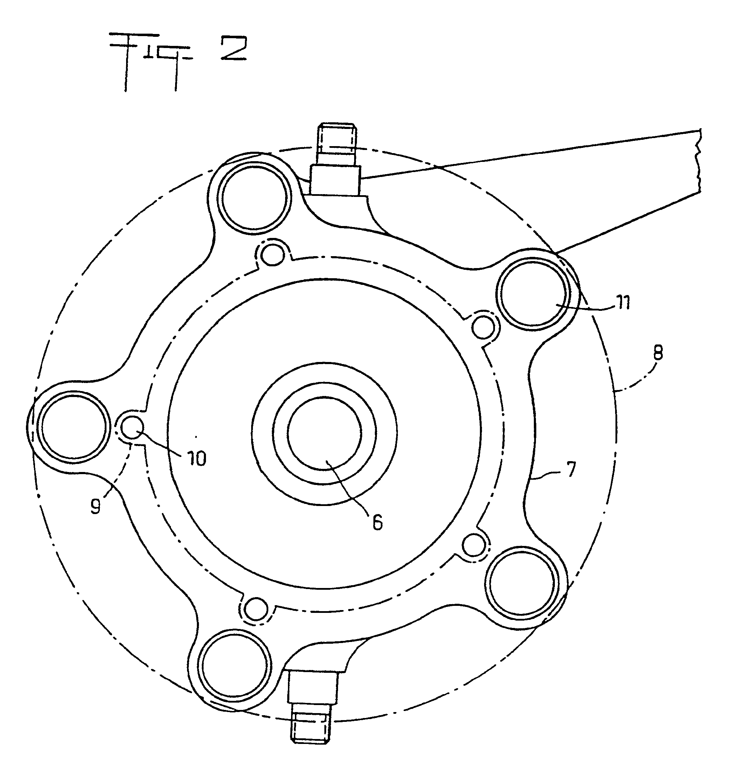

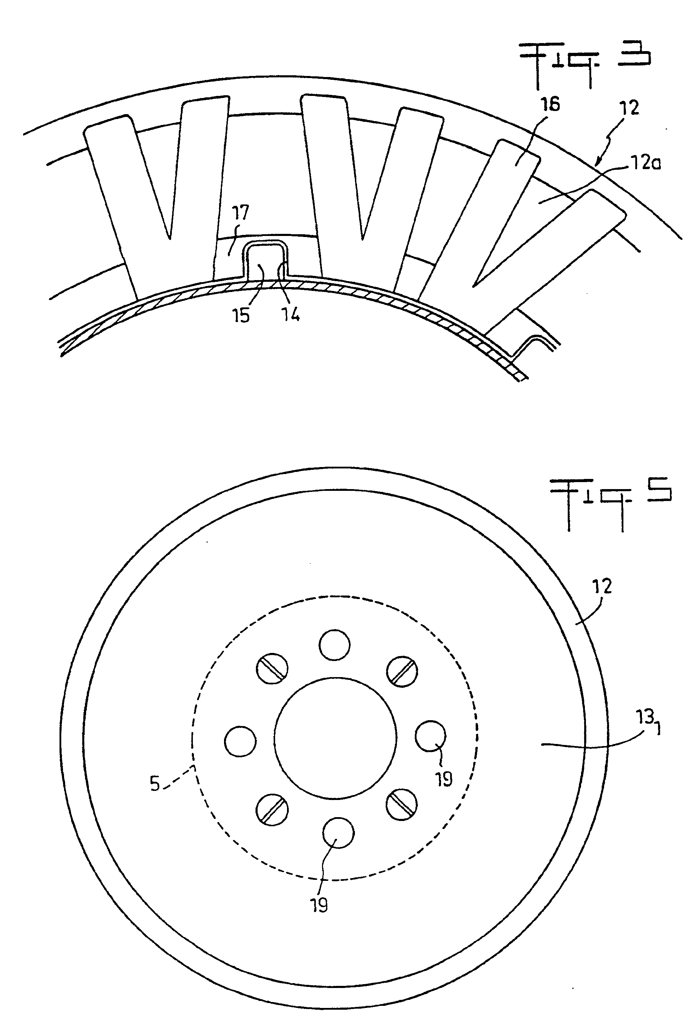

Selon les **fig. 1 à 3**, le frein conforme à l'invention est destiné à être adapté en relation avec une roue **1** d'un véhicule automobile terrestre. De façon conventionnelle, la roue **1** comprend une jante **2** associée à un voile **3** par lequel elle est adaptée, au moyen de vis ou écrous **4**, sur le flasque **5** d'un moyeu tournant **6** monté dans un porte-moyeu **7** fixe, solidaire de la structure porteuse du véhicule.

Selon l'invention, le frein comprend un disque stator **8** annulaire, qui est monté flottant sur le porte-moyeu **7**, de manière à pouvoir être déplacé dans le sens de la flèche $f_1$ à partir d'une position stable de repos en appui contre le porte-moyeu **7**. La direction de déplacement selon la flèche $f_1$ peut être considérée comme globalement parallèle à l'axe du moyeu tournant **6**.

Le montage flottant du disque stator **8** peut être réalisé de plusieurs façons convenables, en faisant intervenir un assemblage du type à cannelures. Les **fig. 1** et **2** montrent que le disque stator **8** peut comporter des encoches **9**, de préférence équidistantes angulairement, pratiquées à partir du bord périphérique interne du disque, de manière à coopérer avec autant de doigts **10** adaptés sur le porte-moyeu **7**, de façon à s'étendre parallèlement à l'axe du moyeu **6**.

Le disque stator présente, côté roue, une face de frottement **8a** et, côté moyeu, une face de poussée **8b** avec laquelle coopèrent **n** pistons d'actionnement **11** logés dans le porte-moyeu **7** et commandés hydrauliquement de façon classique. Les pistons **11**, répartis de façon équidistante angulairement, sont, de préférence, constitués par des cylindres tubulaires ouverts en tête pour réduire leur inertie, ainsi que leur masse susceptible de transmettre des calories au circuit de commande.

Selon l'invention, le disque stator **8** est réalisé en carbone-carbone.

Le frein comprend, par ailleurs, un disque annulaire **12** rotor, porté par une plaque de contre-poussée **13** qui est entraînée en rotation par le flasque **5** du moyeu **6**. Avantageusement, la plaque de contre-poussée **13** est adaptée de façon amovible sur la face avant du flasque **5**, de manière à autoriser l'accès aux différents éléments constitutifs du frein.

Le disque rotor **12** présente, côté moyeu, une face de frottement **12a** qui est placée en vis-à-vis et en proche proximité de la face de frottement **8a** du disque stator **8**. Le disque **12** est monté flottant sur la plaque de contre-poussée **13**, en étant porté par cette dernière par un système d'assemblage du type à cannelures. De préférence, un tel système fait intervenir des encoches **14** ménagées, à partir du bord périphérique intérieur du disque rotor, pour recevoir des dents ou des moulures **15** qui sont formées par la plaque de contre-poussée **13**. Le disque rotor **12** comporte, côté roue, une face **12b** présentant des rainures de ventilation **16** s'ouvrant dans le bord périphérique extérieur du disque et dans un dégagement **17** ménagé à partir du bord périphérique intérieur.

Dans une première forme de réalisation, la plaque de contre-poussée **13** est rendue solidaire, notamment par soudure, du voile de jante **3**, comme cela est illustré par la **fig. 1**.

Le disque rotor **12** est, de préférence, aussi réalisé en carbone-carbone.

La conformation du disque stator **8** et celle du disque rotor **12** sont choisies de manière que les faces en vis-à-vis et coopérantes **8a** et **12a** soient parallèles entre elles et perpendiculaires à l'axe du moyeu **6**.

Les dispositions constructives décrites ci-dessus permettent, ainsi que cela ressort de l'examen des **fig. 1 à 3**, de constituer un frein, du type à disque, dont l'entière surface des faces de frottements contribue à l'effet de freinage. Pour une distance radiale, comparable à celle d'un frein à disque traditionnel, le frein selon l'invention offre une surface de frottement notablement augmentée et présente un rendement supérieur.

Le montage du frein selon l'invention permet de mettre en oeuvre des disques stator et rotor en carbone-carbone qui sont montés flottants par rapport aux éléments fixes et tournants les portant, ce qui permet de compenser les variations de dilatations différentielles entre ces différents éléments.

La disposition constructive retenue permet, ainsi que cela ressort de la **fig. 1**, d'intégrer des disques stator **8** et rotor **12**, respectivement, au porte-moyeu **7** et au voile de roue **3**. Ces organes métalliques contribuent, ainsi, à l'évacuation des calories ayant pour origine l'énergie dissipée au freinage.

La présence des pistons **11** d'actionnement hydraulique permet de reporter latéralement, à distance du disque stator **8**, le circuit de transfert du fluide hydraulique qui est ainsi préservé des risques de vapor-lock.

Le montage du disque rotor **12** permet de délimiter, entre lui-même et la plaque de contre-poussée

13, des canaux à direction sensiblement radiale formés par les rainures **16** et permettant d'établir, dès la rotation de la roue et par effet centrifuge, une circulation d'air contribuant au refroidissement ou au maintien en température du disque rotor **12**.

Le montage du disque rotor **12**, sur la plaque de contre-poussée **13**, permet d'accéder très rapidement et aisément aux différents éléments constitutifs du frein pour en assurer l'entretien ou pour procéder au remplacement de l'un quelconque des éléments d'usure le constituant.

La **fig. 4** illustre une variante de réalisation selon laquelle le disque rotor **12** est monté sur une plaque de contre-poussée **13₁** qui est immobilisée angulairement et fixée sur le flasque **5**, par l'intermédiaire de vis **18** et de tocs **19** servant au centrage d'une roue **1** dont le voile **20** est constitué par une pièce massive moulée, prévue pour coopérer avec un organe de fixation, du type écrou **21**, monté sur le moyeu tournant **6**.

Quel que soit le mode de réalisation, il doit être considéré que les disques rotor et stator pourraient être réalisés de manière que leurs faces en vis-à-vis **12a** et **8a**, tout en étant toujours parallèles entre elles, se présentent sous la forme de segments tronconiques centrés sur l'axe du moyeu **6**.

## Revendications

1. Frein de roue pour véhicule terrestre automobile, du type comportant un disque annulaire stator (**8**) porté par le porte-moyeu (**7**) de la roue et offrant une face de frottement (**8a**) côté roue, des moyens de déplacement du disque stator (**8**) selon une direction (**f₁**) parallèle à l'axe du moyeu et un rotor (**12**) entraîné en rotation par le moyeu et offrant, côté moyeu, une face de frottement (**12a**) disposée en vis-à-vis et en proche proximité de celle du disque stator, caractérisé en ce que :
    — le disque annulaire stator (**8**) est monté flottant sur des doigts (**10**) présentés par le porte-moyeu (**7**) de la roue,
    — les moyens de déplacement sont constitués par des pistons (**11**) actionnés hydrauliquement, disposés dans le porte-moyeu (**7**),
    — et le rotor (**12**) constitue un disque annulaire monté flottant sur une plaque de contre-poussée (**13**) adaptée de façon amovible sur la face avant du flasque (**5**) du moyeu et entraînée en rotation par le moyeu.

2. Frein de roue selon la revendication 1, caractérisé en ce que les disques stator et rotor sont en carbone.

3. Frein de roue selon la revendication 1 ou 2, caractérisé en ce que le disque rotor (**12**) présente, dans sa surface côté roue, des rainures de ventilation (**16**) communiquant avec un dégagement annulaire (**17**) ménagé à partir du bord périphérique interne du disque.

4. Frein de roue selon l'une des revendications 1 à 3, caractérisé en ce que les faces (**12a** et **8a**) en vis-à-vis des disques rotor et stator sont parallèles entre elles et perpendiculaires à l'axe du moyeu.

5. Frein de roue selon l'une des revendications 1 à 3, caractérisé en ce que les faces (**12a** et **8a**) en vis-à-vis des disques rotor et stator sont parallèles entre elles et définissent des surfaces de révolution en segments tronconiques centrés sur l'axe du moyeu.

6. Frein de roue selon l'une des revendications 1 à 5, caractérisé en ce que les disques stator et rotor sont montés flottants par un système d'assemblage du type à cannelure.

7. Frein de roue selon la revendication 1, caractérisé en ce que la plaque de contre-poussée (**13**) est solidaire du voile de jante de la roue.

8. Frein de roue selon la revendication 1, caractérisé en ce que la plaque de contre-poussée (**13₁**), indépendante de la roue, est fixée de façon amovible sur le flasque du moyeu.

## Patentansprüche

1. Radbremse für Landfahrzeug vom Typ mit einer ringförmigen Ständer- oder Statorscheibe (8), getragen von dem Nabenträger (7) des Rades und eine Reibungsseite (8a) auf der Radseite bildend, mit Bewegungseinrichtungen der Statorscheibe (8) gemäß einer Richtung (f₁) parallel zur Achse der Nabe und einem Rotor oder Läufer (12), der in Drehung durch die Nabe versetzt wird, und auf der Nabenseite eine Reibungsfläche (12a) aufweist, die gegenüber und in enger Nähe zu jener der Statorscheibe ist, **dadurch gekennzeichnet, daß** :
    die ringförmige Statorscheibe (8) schwimmend auf Fingern (10) angebracht ist, die auf dem Nabenträger (7) des Rades angeordnet sind,
    die Bewegungseinrichtungen gebildet sind aus hydraulisch betätigten Kolben (11), die in dem Nabenträger (7) angeordnet sind, und
    der Rotor (12) eine ringförmige Scheibe bildet, die schwimmend auf einer Gegendruckplatte (13) gelagert ist, die geeignet ist, auf entfernbare Weise auf der Vorderseite des Flansches (5) der Nabe angepaßt zu werden und durch die Nabe in Drehung versetzt wird.

2. Radbremse nach Anspruch 1, **dadurch gekennzeichnet, daß** die Statorscheibe und Rotorscheibe aus Karbon sind.

3. Radbremse nach Anspruch 1 oder 2, **dadurch gekennzeichnet, daß** die Rotorscheibe (12) an ihrer Oberfläche der Radseite Lüftungsnuten (16) aufweist, die mit einer ringförmigen Ausnehmung (17) zusammenwirken, die ausgehend vom inneren Umfangsrand der Scheibe ausgebildet ist.

4. Radbremse nach einem der Ansprüche 1 bis 3, **dadurch gekennzeichnet,** daß die Seiten (12a und 8a) gegenüber den Rotor- und Statorscheiben untereinander parallel und senkrecht zur Achse der Nabe verlaufen.

5. Radbremse nach einem der Ansprüche 1 bis 3, **dadurch gekennzeichnet,** daß die Seiten (12a und 8a) gegenüber den Rotor- und Statorscheiben untereinander parallel verlaufen und Drehoberflächen von stumpfförmigen Segmenten definieren, die auf der Achse der Nabe zentriert sind.

6. Radbremse nach einem der Ansprüche 1 bis 5, **dadurch gekennzeichnet,** daß die Stator- und Rotorscheiben durch ein Zusammensetzsystem vom Typ mit Kanälen schwimmend gelagert sind.

7. Radbremse nach Anspruch 1, **dadurch gekennzeichnet,** daß die Gegendruckplatte (13) mit dem Planseitenschlag des Rades verbunden ist.

8. Radbremse nach Anspruch 1, **dadurch gekennzeichnet,** daß die Gegendruckplatte (13$_1$), die unabhängig vom Rad ist, auf entfernbare Weise auf dem Nabenflansch besfestigt ist.

## Claims

1. Wheel brake for motor-vehicle used on land, of the type comprising an annular stator disk (8) carried by the hub-carrier (7) of the wheel and having a friction face (8a) on the wheel side, means of moving the stator disk (8) in a direction (f$_1$) parallel to the hub axis and a rotor (12) driven in rotation by the hub and having, on the hub side, a friction face (12a) situated in facing relationship and very close to that of the stator disk,
brake characterized in that :
     — the annular stator disk (8) is slidably mounted on fingers (10) provided on the hub-carrier (7) of the wheel,
     — the moving means are constituted by hydraulically controlled pistons (11), placed in the hub-carrier (7),
     — and the rotor (12) constitutes an annular disk slidably mounted on a counter-thrust plate (13) adapted in removable manner on the front face of the flange (5) of the hub and driven in rotation by said hub.

2. Wheel brake according to claim 1, characterized in that the stator and rotor disks are in carbon.

3. Wheel brake according to claim 1 or 2, characterized in that the rotor disk (12) is provided, on its wheel side surface, with ventilation grooves (16) which communicate with an annular passage (17) provided from the inner peripheral edge of the disk.

4. Wheel brake according to one of claims 1 to 3, characterized in that the faces (12a and 8a) in facing relationship of the rotor and stator disks are parallel one to the other and perpendicular to the hub axis.

5. Wheel brake according to one of claims 1 to 5, characterized in that the faces (12a and 8a) in facing relationship of the rotor and stator disks are parallel one to the other and define revolution surfaces in truncated segments centered on the hub axis.

6. Wheel brake according to one of claims 1 to 5, characterized in that the stator and rotor disks are slidably mounted by a splined-type assembling system.

7. Wheel brake according to claim 1, characterized in that the counter-thrust plate (13) is fast with the run-out of the wheel rim.

8. Wheel brake according to claim 1, characterized in that the counter-thrust plate (13$_1$), which is separate from the wheel, is removably fixed on the flange of the hub.

Fig. 1

Fig. 4

Fig 2

Fig. 3

16

12

12a

17

15    14

Fig. 5

12

13

5

19

19